# EUROPÄISCHE PATENTANMELDUNG

(11) **EP 3 896 477 A1**
(43) Veröffentlichungstag der Anmeldung: **20.10.2021**
(21) Anmeldenummer: 21152758.5
(22) Anmeldetag: 21.01.2021
(51) Int. Cl.: G01S 5/02, H04B 7/26, H04W 4/20

(54) **VERFAHREN UND VORRICHTUNGEN ZUR ERMITTLUNG EINER POSITION EINES MOBILEN TEILNEHMERS EINES DRAHTLOSKOMMUNIKATIONSNETZWERKS**

(30) Priorität: 16.04.2020 DE 102020204819
(71) Anmelder: Robert Bosch GmbH, 70442 Stuttgart (DE)
(72) Erfinder: Ludwig, Stephan, 71272 Renningen-Malmsheim (DE)

(57) **Zusammenfassung**

Es wird ein Verfahren zur Ermittlung einer Position eines mobilen Teilnehmers eines Drahtloskommunikationsnetzwerks bereitgestellt, wobei das Verfahren umfasst: Ermitteln (102) einer ersten Distanz zwischen dem mobilen Teilnehmer und einem ortsfesten Teilnehmer des Drahtloskommunikationsnetzwerks in Abhängigkeit von einem von dem ortsfesten Teilnehmer oder dem mobilen Teilnehmer ausgesendeten Ortungssignal; Ermitteln (104) einer zweiten Distanz zwischen einer ortsfesten Replikatoreinheit und dem mobilen Teilnehmer in Abhängigkeit von einem replizierten Signal, welches mittels der ortsfesten Replikatoreinheit in Abhängigkeit von dem Ortungssignal ausgesendet wird, und in Abhängigkeit von einer weiteren Distanz zwischen der Replikatoreinheit und dem ortsfesten Teilnehmer; und Ermitteln (106) einer Position des mobilen Teilnehmers in Abhängigkeit von der ersten Distanz und in Abhängigkeit von der zweiten Distanz.

## Beschreibung

### Stand der Technik

Die Erfindung betrifft ein Verfahren und eine Vorrichtung zur Ermittlung einer Position eines mobilen Teilnehmers eines Drahtloskommunikationsnetzwerks, einen Teilnehmer des Drahtloskommunikationsnetzwerks, eine entfernt angeordnete Netzwerkeinheit sowie das Drahtloskommunikationsnetzwerk.

Lokalisierungslösungen, welche Funkwellen zur Positionsermittlung mobiler Teilnehmer nutzen, sind allgemein bekannt.

### Offenbarung der Erfindung

Das der Erfindung zugrundeliegende Problem wird durch ein Verfahren gemäß dem Anspruch 1, durch eine Vorrichtung gemäß einem nebengeordneten Anspruch, durch einen Teilnehmer gemäß einem nebengeordneten Anspruch, durch eine entfernt angeordnete Netzwerkeinheit gemäß einem nebengeordneten Anspruch sowie durch ein Drahtloskommunikationsnetzwerk gemäß einem weiteren nebengeordneten Anspruch gelöst. Vorteilhafte Weiterbildungen sind in den Unteransprüchen angegeben und finden sich ferner in der nachfolgenden Beschreibung sowie in der Zeichnung.

Ein erster Aspekt der Beschreibung betrifft ein Verfahren zur Ermittlung einer Position eines mobilen Teilnehmers eines Drahtloskommunikationsnetzwerks, wobei das Verfahren umfasst: Ermitteln einer ersten Distanz zwischen dem mobilen Teilnehmer und einem ortsfesten Teilnehmer des Drahtloskommunikationsnetzwerks in Abhängigkeit von einem von dem ortsfesten Teilnehmer oder dem mobilen Teilnehmer ausgesendeten Ortungssignal; Ermitteln einer zweiten Distanz zwischen einer ortsfesten Replikatoreinheit und dem mobilen Teilnehmer in Abhängigkeit von einem replizierten Signal, welches mittels der ortsfesten Replikatoreinheit in Abhängigkeit von dem Ortungssignal ausgesendet wird, und in Abhängigkeit von einer weiteren Distanz zwischen der Replikatoreinheit und dem ortsfesten Teilnehmer; und Ermitteln einer Position des mobilen Teilnehmers in Abhängigkeit von der ersten Distanz und in Abhängigkeit von der zweiten Distanz.

Die ortsfeste Replikatoreinheit mit bekannter räumlicher Position reflektiert das Ortungssignal, welches von dem ortsfesten Teilnehmer des Drahtlosnetzwerks mit bekannter Position oder dem mobilen Teilnehmer ausgesendet wird. Damit wird ermöglicht, dass ein mobiler Teilnehmer auch dann lokalisierbar ist, wenn beispielsweise die Anzahl der ortsfesten Teilnehmer mit Sichtverbindung zum mobilen Teilnehmer zu gering ist. Es wird also ermöglicht, die räumliche Positionierung des mobilen Teilnehmers mithilfe von Funksignalen zu ermitteln, auch wenn nur wenige Ankerknoten bzw. ortsfeste Teilnehmer mit direkter Sichtverbindung verfügbar sind.

Darüber hinaus dienen die Replikatoreinheiten dazu, die Präzision der Ermittlung der räumlichen Position des mobilen Teilnehmers zu erhöhen.

Weiterhin wird durch das Vorsehen von Replikatoreinheiten die Lokalisierung robuster gegen Angriffe, die eine falsche Position des mobilen Teilnehmers vortäuschen sollen.

Von der verbesserten Lokalisierung profitieren Anwendungen. So ergeben durch mobile Teilnehmer aufgezeichnete Messwerte im Rahmen einer Datenanalyse erst dann einen Sinn, wenn die räumliche Position der mobilen Teilnehmer, also der Ort der Aufzeichnung des jeweiligen Messwerts, bekannt ist. Auch ist die Ermittlung der räumlichen Position der mobilen Teilnehmer Voraussetzung für bestimmte zu realisierende Funktionen.

Insbesondere Indoor-Lokalisierungslösungen im Fertigungsbereich oder Gebäudemanagement profitieren von dem vorgeschlagenen Lokalisierungsschema. Fertigungen sind beispielsweise zum einen auf präzise Positionsermittlung für mobile Teilnehmer angewiesen, zum anderen verändern sich Fertigungsumgebungen dynamisch, womit Hindernisse eine direkte Sichtverbindung, von der die Lokalisierung profitiert, potentiell blockieren. Use cases für die vorgeschlagene Lokalisierung umfassen: Track and Trace für Werkzeuge und Produkte, Produktionsdokumentation für sicherheitsrelevante Produkte, automatisierte Flurförderfahrzeuge, Dokumentation des Maschinenparks mit Maschinenpositionen, etc.

Es wird also die Lokalisierungsgenauigkeit verbessert und gleichzeitig werden die Kosten, beispielsweise für Installation und Kauf von ortsfesten Teilnehmern, reduziert.

Ein vorteilhaftes Beispiel zeichnet sich dadurch aus, dass das Verfahren umfasst: Ermitteln wenigstens einer weiteren Distanz zwischen dem mobilen Teilnehmer und einer weiteren ortsfesten Replikatoreinheit oder einem weiteren ortsfesten Teilnehmer; und Ermitteln der Position des mobilen Teilnehmers in Abhängigkeit von der ersten Distanz, in Abhängigkeit von der zweiten Distanz und in Abhängigkeit von der wenigstens einen weiteren Distanz.

Die Lokalisierung des mobilen Teilnehmers wird umso genauer, je mehr Distanzen von unterschiedlichen ortsfesten Teilnehmern oder Replikatoreinheiten, zu denen der mobile Teilnehmer eine direkte Sichtverbindung besitzt, ermittelt werden können.

Ein vorteilhaftes Beispiel zeichnet sich dadurch aus, dass das Verfahren umfasst: Ermitteln der wenigstens einen weiteren Distanz zwischen der weiteren ortsfesten Replikatoreinheit und dem mobilen Teilnehmer in Abhängigkeit von einem weiteren replizierten Signal, welches mittels der weiteren ortsfesten Replikatoreinheit in Abhängigkeit von einem von einem weiteren ortsfesten Teilnehmer oder dem mobilen Teilnehmer ausgesendeten Ortungssignal ausgesendet wird, und in Abhängigkeit von einer weiteren Distanz zwischen der weiteren ortsfesten Replikatoreinheit und dem ortsfesten Teilnehmer.

Vorteilhaft werden mehrere Replikatoreinheiten zur Ermittlung der Position des mobilen Teilnehmers verwendet, womit die Dichte der ortsfesten Teilnehmer des Drahtloskommunikationsnetzwerks aus der Perspektive der Lokalisierung mobiler Teilnehmer reduziert werden kann.

Ein vorteilhaftes Beispiel zeichnet sich dadurch aus, dass das Verfahren umfasst: Ermitteln der wenigstens einen weiteren Distanz zwischen dem weiteren ortsfesten Teilnehmer und dem mobilen Teilnehmer in Abhängigkeit von einem weiteren Ortungssignal, welches mittels dem weiteren ortsfesten Teilnehmer ausgesendet wird.

Vorteilhaft werden mehrere ortsfeste Teilnehmer mit Sichtverbindung zum mobilen Teilnehmer zur Ermittlung der Position des mobilen Teilnehmers herangezogen.

Ein vorteilhaftes Beispiel zeichnet sich dadurch aus, dass das Verfahren umfasst: Ermitteln der zweiten Distanz, insbesondere eines weiteren Werts der zweiten Distanz, zwischen der ortsfesten Replikatoreinheit und dem mobilen Teilnehmer in Abhängigkeit von einem weiteren replizierten Signal, welches mittels der ortsfesten Replikatoreinheit in Abhängigkeit von dem Ortungssignal des mobilen Teilnehmers oder einem von einem weiteren ortsfesten Teilnehmer ausgesendeten Ortungssignal ausgesendet wird, und in Abhängigkeit von einer weiteren Distanz zwischen der Replikatoreinheit und dem weiteren ortsfesten Teilnehmer.

Vorteilhaft kann die ortsfeste Replikatoreinheit mehrfach zur Verbesserung der Schätzung der zweiten Distanz verwendet werden. Das heißt, dass die Replikatoreinheit entweder replizierte Signale in Abhängigkeit von von unterschiedlichen ortsfesten Teilnehmern stammenden Ortungssignale abstrahlt, oder dass die Replikatoreinheit das von dem mobilen Teilnehmer stammende Ortungssignal so abstrahlt, dass es wenigstens zwei unterschiedliche ortsfeste Teilnehmer erreicht.

In einem vorteilhaften Beispiel umfasst das Verfahren: Ermitteln einer dritten Distanz zwischen einem bzw. dem ersten Teilnehmer des Drahtloskommunikationsnetzwerks und der ortsfesten Replikatoreinheit in Abhängigkeit von einem von dem ersten ortsfesten Teilnehmer ausgesendeten Ortungssignal; Ermitteln einer vierten Distanz zwischen einem zweiten Teilnehmer und der ortsfesten Replikatoreinheit in Abhängigkeit von einem von dem zweiten ortsfesten Teilnehmer ausgesendeten Ortungssignal; und Ermitteln einer Position der Replikatoreinheit in Abhängigkeit von der ersten Distanz und in Abhängigkeit von der zweiten Distanz.

Dadurch wird vorteilhaft ermöglicht, dass die vorab nicht bekannten Positionen von statisch angeordneten Replikatoreinheiten durch das Netzwerk selbst ermittelt werden.

Ein zweiter Aspekt dieser Beschreibung betrifft eine Vorrichtung zur Ermittlung einer Position eines mobilen Teilnehmers eines Drahtloskommunikationsnetzwerks, wobei die Vorrichtung dazu konfiguriert ist, mittels einer Verarbeitungseinheit eine erste Distanz zwischen dem mobilen Teilnehmer und einem ortsfesten Teilnehmer des Drahtloskommunikationsnetzwerks in Abhängigkeit von einem von dem ortsfesten Teilnehmer oder dem mobilen Teilnehmer ausgesendeten Ortungssignal zu ermitteln; mittels einer Verarbeitungseinheit eine zweite Distanz zwischen einer ortsfesten Replikatoreinheit und dem mobilen Teilnehmer in Abhängigkeit von einem replizierten Signal, welches mittels der ortsfesten Replikatoreinheit in Abhängigkeit von dem Ortungssignal ausgesendet wird, und in Abhängigkeit von einer weiteren Distanz zwischen der Replikatoreinheit und dem ortsfesten Teilnehmer zu ermitteln; und mittels einer Verarbeitungseinheit eine Position des mobilen Teilnehmers in Abhängigkeit von der ersten Distanz und in Abhängigkeit von der zweiten Distanz zu ermitteln.

In einem vorteilhaften Beispiel ist die Vorrichtung gemäß dem zweiten Aspekt zur Durchführung des Verfahrens gemäß dem ersten Aspekt ausgebildet.

Ein dritter Aspekt betrifft einen mobilen oder ortsfesten Teilnehmer eines Drahtloskommunikationsnetzwerks, welcher die Vorrichtung gemäß dem zweiten Aspekt umfasst.

Ein vierter Aspekt betrifft eine von einem Drahtloskommunikationsnetzwerk entfernt angeordnete Netzwerkeinheit, welche die Vorrichtung gemäß dem zweiten Aspekt umfasst.

Ein fünfter Aspekt dieser Beschreibung betrifft ein Drahtloskommunikationsnetzwerk umfassend die Vorrichtung gemäß dem zweiten Aspekt, eine Mehrzahl ortsfester Teilnehmer, eine Mehrzahl von Replikatoreinheiten und wenigstens einen mobilen Teilnehmer.

In der Zeichnung zeigen:
- Figuren 1 und 5: jeweils ein schematisches Ablaufdiagramm; und
- Figuren 2, 3 und 4: jeweils ein schematisch dargestelltes Drahtloskommunikationsnetzwerk.

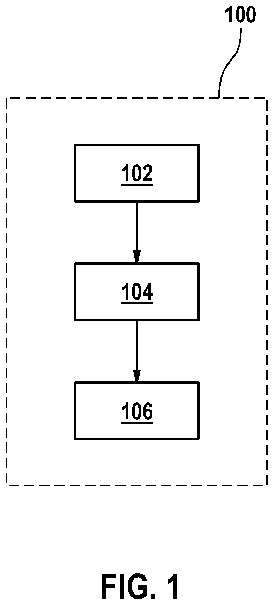

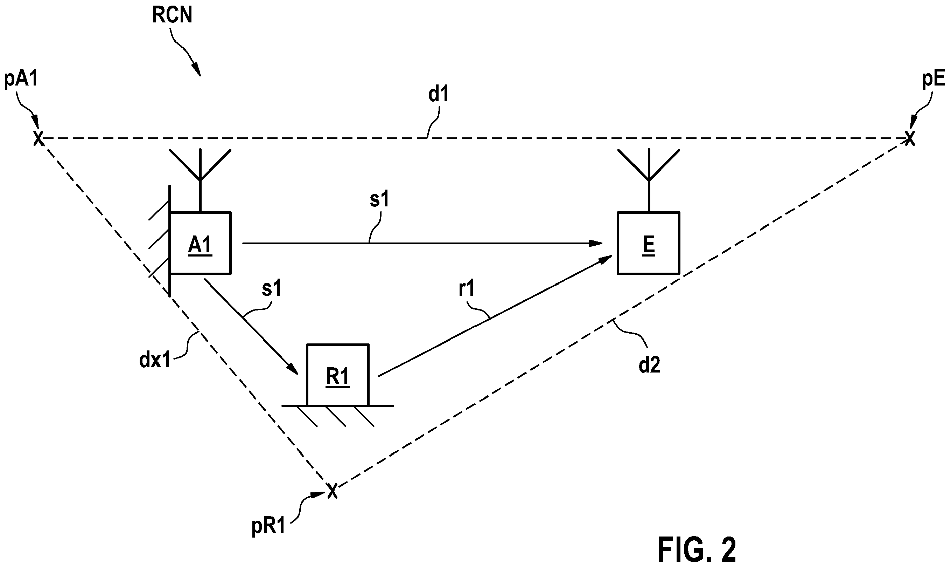

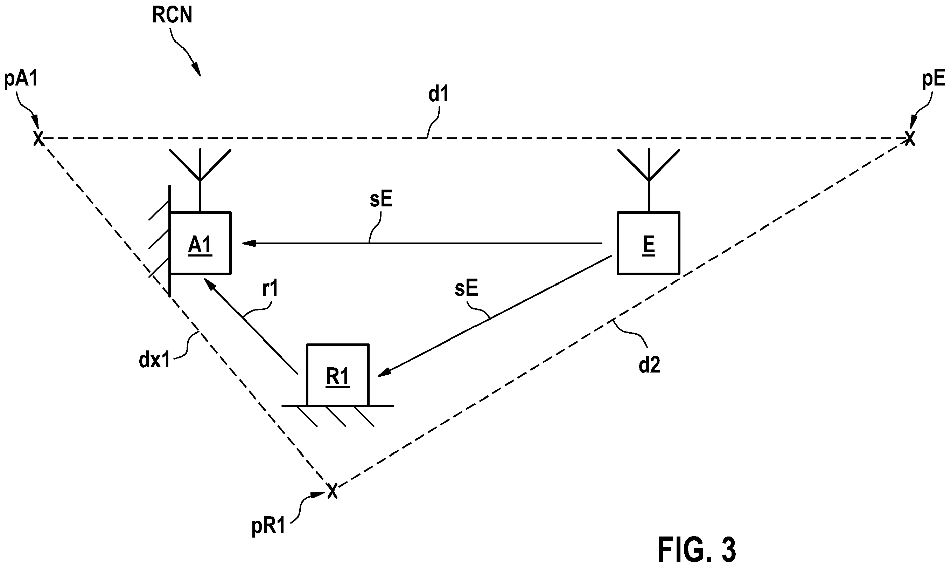

Figur 1 zeigt ein schematisches Ablaufdiagramm zur Ermittlung einer Position eines mobilen Teilnehmers E eines Drahtloskommunikationsnetzwerks RCN und die Figuren 2 und 3 eine jeweilige Ausprägung einer Funkkommunikation innerhalb eines Drahtloskommunikationsnetzwerks RCN. Nachfolgend wird auf die Figuren 1 bis 3 gleichzeitig Bezug genommen. Des Weiteren wird darauf verwiesen, dass die Darstellung des Drahtloskommunikationsnetzwerk RCN nur schematisch ist. Insbesondere die gezeigten Positionen und Distanzen sind zur besseren Übersicht getrennt von den jeweiligen zugehörigen Einheiten dargestellt.

Mittels einer Verarbeitungseinheit 102 wird eine erste Distanz d1 zwischen dem mobilen Teilnehmer E und dem ortsfesten Teilnehmer A1 des Drahtloskommunikationsnetzwerks RCN in Abhängigkeit von einem von dem ortsfesten Teilnehmer A1 oder dem mobilen Teilnehmer E ausgesendeten Ortungssignal s1 bzw. sE ermittelt.

Mittels einer Verarbeitungseinheit 104 wird eine zweite Distanz d2 zwischen einer ortsfesten Replikatoreinheit R1 und dem mobilen Teilnehmer E in Abhängigkeit von einem replizierten Signal r1, welches mittels der ortsfesten Replikatoreinheit R1 in Abhängigkeit von dem Ortungssignal s1 bzw. sE ausgesendet wird, und in Abhängigkeit von einer weiteren Distanz dx1 zwischen der Replikatoreinheit R1 und dem ortsfesten Teilnehmer A1 ermittelt. Die räumlichen Positionen pR1, pA1 der Replikatoreinheit R1 und des ortsfesten Teilnehmers A1 sind bekannt, womit auch die weitere Distanz dx1 bekannt ist.

Mittels einer Verarbeitungseinheit 106 wird eine Position pE des mobilen Teilnehmers E in Abhängigkeit von der ersten Distanz d1 und in Abhängigkeit von der zweiten Distanz d2 ermittelt. Selbstverständlich werden zur genaueren Ermittlung der räumlichen Position pE zusätzliche Distanzen hinzugezogen.

Beispielsweise wird im ortsfesten Teilnehmer A1 die Signallaufzeit oder die Signallaufzeitdifferenz des reflektierten Signals zusätzlich zur Laufzeit bzw. der Laufzeitdifferenz des direkt empfangenen Ortungssignals bestimmt. Diese Laufzeiten werden als von zusätzlichen "virtuellen" Ankerknoten stammend zur Lokalisierung verwendet.

Die Vorrichtung 100 kann innerhalb einer der gezeigten Teilnehmer A1 oder E des Drahtloskommunikationsnetzwerks RCN oder in einer von dem Drahtlosnetzwerk RCN entfernt angeordneten, nicht gezeigten Netzwerkeinheit angeordnet sein. In einem weiteren Beispiel umfasst das Drahtloskommunikationsnetzwerk RCN die Vorrichtung 100, eine Mehrzahl ortsfester Teilnehmer, eine Mehrzahl von Replikatoreinheiten und wenigstens einen mobilen Teilnehmer E.

Die mobilen und ortsfesten Teilnehmer A1, E des Drahtloskommunikationsnetzwerks RCN sind als vollwertige Netzwerkknoten ausgeführt, d.h. sie sind vollwertige Teilnehmer mit Datensendeeinheit und Datenempfangseinheit und nehmen an der Datenfunkkommunikation des Drahtloskommunikationsnetzwerks RCN teil.

Die Replikatoreinheit R1 hingegen sind nicht unmittelbarer Teilnehmer des Drahtloskommunikationsnetzwerks RCN. Die Replikatoreinheit R1 benötigt entweder gar keine Energie, wenn diese passiv ausgeführt ist, oder sie benötigt nur einen sehr wenig Strom, da Sie beispielsweise das empfangene Ortungssignal lediglich verstärkt. Damit hat die Replikatoreinheit R1 eine längere Batterielebensdauer, geringen Implementierungsaufwand und geringere Herstellkosten im Vergleich zu dem ortsfesten Teilnehmer A1 des Drahtloskommunikationsnetzwerks RCN.

Ist die Replikatoreinheit R1 passiv ausgeführt, so reflektiert die Replikatoreinheit R1 die auftreffenden Ortungssignale.

Ist die Replikatoreinheit R1 aktiv ausgeführt, so kann diese das empfangene Ortungssignal s1 zum Zwecke der besseren Trennbarkeit verstärken und als Replikation r1 aussenden. In diesem Beispiel ist die Replikatoreinheit R1 als HF-Relais ausgeführt.

Für die vorgeschlagene Ermittlung der räumlichen Position des mobilen Teilnehmers können verschiedene Multilaterationsalgorithmen verwendet werden. So lässt sich beispielsweise aus den wenigstens zwei Distanzen d1 und d3 wenigstens eine Koordinate in einer Ebene ermitteln, wobei die Koordinate gemäß der räumlichen Position pE ein Schnittpunkt zweier Kreise um den jeweiligen Mittelpunkt pA1, pR2 mit dem Radius d1, d3 ist. Liegen wenigstens drei Distanzen d1, d2 und d3 vor, so lässt sich beispielsweise über einen Schnitt von Kugeln, die jeweils einen Mittelpunkt gemäß pA1, pR2, pR1 und einen Radius gemäß d1, d2, d3 aufweisen, ein Schnittpunkt im Raum gemäß der räumlichen Position pE bestimmen.

Die in dieser Beschreibung verwendeten Ortungssignale bzw. das eine Ortungssignal s1 können im Rahmen einer weiteren Funkdatenübertragung versendet werden. In einem weiteren Beispiel dienen das wenigstens eine Ortungssignal s1 dem ausschließlichen Zweck der Laufzeitmessung bzw. Ortung des mobilen Teilnehmers E. Das wenigstens eine Ortungssignal s1 umfasst beispielsweise eine vorab bekannte Trainingsfolge wie eine Gold Sequence oder eine Zadoff-Chu Sequence, mit welcher eine Kanalimpulsantwort oder eine damit verwandte Größe bestimmt wird. Diese wird bei der Datenübertragung z.B. zum Zwecke der Entzerrung verwendet. Aus der Trainingsfolge kann bei zueinander zeitsynchronisierten Sendern und Empfängern die absolute Signallaufzeit bzw. bei nicht synchronisierten Teilnehmern die relative Signallaufzeit bzw. Laufzeitdifferenz vom Sender zum Empfänger bestimmt werden. Mit den Laufzeiten bzw. Laufzeitdifferenzen zu mehreren ortsfesten Teilnehmern, von denen beispielsweise wenigstens eine Anzahl von vier für eine Positionsermittlung im Raum aufgrund Zeitdifferenzen vorhanden sind, wird unter Verwendung eines Multilaterationsalgorithmus die Position des mobilen Teilnehmers berechnet, wobei die Position der zugehörigen ortsfesten Teilnehmer bekannt ist. Das in dieser Beschreibung bereitgestellte Verfahren bzw. die entsprechende Vorrichtung sind für eine Vielzahl von Messwerttypen (z.B. time of arrival oder time difference of arrival) und unabhängig vom gewählten Lösungsalgorithmus für das Multilaterationsproblem verwendbar.

Gemäß dem Beispiel der Figur 2 sendet der Teilnehmer A1 das Ortungssignal s1, welches eine Trainingsfolge umfasst, aus. Mittels des Ortungssignals s1 wird die Signallaufzeit bzw. die Signallaufzeitdifferenz von dem Teilnehmer A1 zu dem Teilnehmer E bestimmt. Aufgrund der Rundstrahlcharakteristik der Antennen des Teilnehmers A1 erreicht das Ortungssignal s1 auch die Replikatoreinheit R1, welche das Ortungssignal s1 reflektiert oder repliziert, so dass sich die Replikation r1 im Empfänger des mobilen Teilnehmers E überlagern bzw. zu unterschiedlichen Zeitpunkten ankommen. Zusätzlich zur relativen Laufzeit des direkten "Line of Sight"-Signals in Form des direkt empfangenen Ortungssignals s1 wird nun aus der Kanalimpulsantwort mit einem Algorithmus wie beispielsweise Peak-Search die Laufzeit der reflektierten Ortungssignale im Sinne des Replikationssignals r1 relativ zum "Line of Sight"-Signal bestimmt.

Aus der weiteren Distanz dx1 lässt sich mittels der Lichtgeschwindigkeit eine erste Signallaufzeit zwischen dem ortsfesten Teilnehmer A1 und der Replikatoreinheit R1 bestimmen. Eine zweite Signallaufzeit zwischen der Replikatoreinheit R1 und dem mobilen Teilnehmer E ergibt sich aus der Differenz der gemessenen Signallaufzeit des Signals r1, wobei diese Signallaufzeit zwischen dem ortsfesten Teilnehmer A1 und dem mobilen Teilnehmer E ermittelt wird, und der ersten Signallaufzeit.

Die Laufzeiten werden für eine Mehrzahl von Replikatoreinheiten R1, welche Sichtkontakt mit dem mobilen Teilnehmer E haben, ermittelt und der Vorgang für eine Mehrzahl von ortsfesten Teilnehmern A1 und damit auch für die Replikatoreinheiten R1, etc. wiederholt. Aus den so gemessenen Laufzeiten bzw. Laufzeitdifferenzen wird dann mithilfe der bekannten Position der ortsfesten Teilnehmer A1, etc. und der Replikatoreinheiten R1, etc. unter Verwendung des gewählten Multilaterationsalgorithmus die räumliche Position des mobilen Teilnehmers E ermittelt. Die hierbei erzeugten Laufzeiten bzw. Laufzeitdifferenzen werden mithilfe der Lichtgeschwindigkeit in Distanzen umgerechnet.

Der Multilaterationsalgorithmus kann, wie bereits erläutert, auch durch die vom Drahtloskommunikationsnetzwerk RCN entfernten Netzwerkeinheit ausgeführt werden. Hierzu übermitteln die beteiligten Teilnehmer des Drahtloskommunikationsnetzwerks RCN die ermittelten Signallaufzeiten bzw. Signallaufzeitdifferenzen an die entfernt angeordnete Netzwerkeinheit, was z.B. über das vorhandene Drahtloskommunikationsnetzwerk RCN erfolgen kann. Das Lokalisierungsergebnis in Form der räumlichen Position des mobilen Teilnehmers E kann an der entfernt angeordneten Netzwerkeinheit genutzt, einem anderen Teilnehmer mitgeteilt, und/oder an den georteten mobilen Teilnehmer per Datenfunk gesendet werden.

Die Lokalisierung des Endgeräts kann auch durch das Netzwerk der ortsfesten Teilnehmer A1, etc. erfolgen, wenn der mobile Teilnehmer das Ortungssignal sE aussendet und die ortsfesten Teilnehmer A1, etc. die Analyse der Kanalimpulsantwort durchführen. Die Positionsberechnung kann dann verteilt auf allen oder einer Auswahl an ortsfesten Teilnehmern A1 und/oder in der entfernt angeordneten Netzwerkeinheit erfolgen.

Sind die Positionen der Replikatoreinheiten R1, etc. nicht vorab bekannt, so können nacheinander die Positionen der Replikatoreinheiten R1, etc. gelernt werden, indem das Verfahren wiederholt durchgeführt wird, wobei nacheinander ein jeweiliger der ortsfesten Teilnehmer A1 oder der mobile Teilnehmer E, etc. als Sender und gleichzeitig als Empfänger mit bekannter Position fungiert. Aufgrund der Reflexionen des ausgesandten Ortungssignals durch die jeweilige Replikatoreinheit entspricht die Laufzeit vom jeweiligen ortsfesten Teilnehmer A1 zur Replikatoreinheit R1 der halben gemessenen Laufzeit aufgrund des Hin- und Rückwegs. Hierbei kann das gleiche Prinzip Verwendung finden, welches zur Lokalisierung des mobilen Teilnehmers verwendet wird.

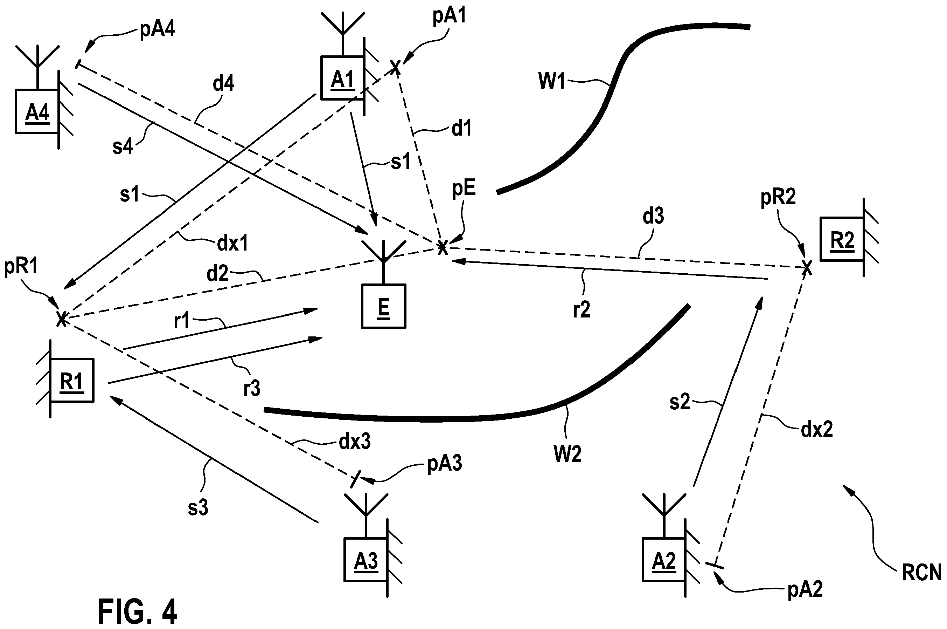

Nimmt man beispielsweise an, dass die räumliche Position pR1 der Replikatoreinheit R1 noch nicht bekannt ist, so umfasst das in Figur 4 gezeigte Beispiel: Ein Ermitteln einer dritten Distanz dx1 zwischen einem bzw. dem ersten Teilnehmer A1 des Drahtloskommunikationsnetzwerks RCN und der ortsfesten Replikatoreinheit R1 in Abhängigkeit von einem von dem ersten ortsfesten Teilnehmer A1 ausgesendeten Ortungssignal s1; ein Ermitteln einer vierten Distanz dx2 zwischen einem zweiten Teilnehmer A3 und der ortsfesten Replikatoreinheit R1 in Abhängigkeit von einem von dem zweiten ortsfesten Teilnehmer A3 ausgesendeten Ortungssignal s3; und ein Ermitteln einer Position pR1 der Replikatoreinheit R1 in Abhängigkeit von der ersten Distanz d1 und in Abhängigkeit von der zweiten Distanz d2. Alternativ zu der Verwendung des ortsfesten Teilnehmers A1 kann auch der mobile Teilnehmer E und dessen bekannte Position pE zur Ermittlung der Position pR1 dienen. Selbstverständlich ermöglichen zusätzlich bekannte Distanzen zu der Replikatoreinheit R1 eine verbesserte Schätzung bzw. Ermittlung der räumlichen Position pR1.

Die so bestimmten Positionen der Replikatoreinheiten werden zentral gespeichert und allen Teilnehmern bereitgestellt. So kann sukzessiv ein weiträumiges Lokalisierungsnetzwerk errichtet werden, welches sich Zug um Zug selbst kalibriert.

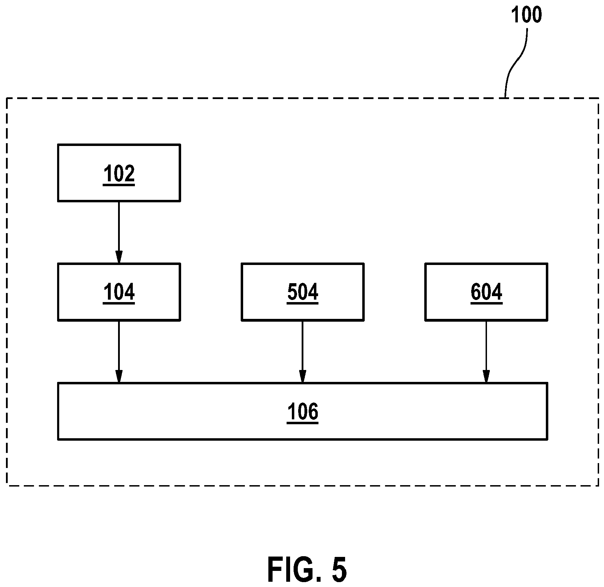

Figur 4 zeigt das Drahtloskommunikationsnetzwerk RCN und Figur 5 zeigt ein schematisches Ablaufdiagramm. Im Folgenden wird auf beide Figuren 4 und 5 Bezug genommen.

Das Drahtloskommunikationsnetzwerk RCN der Figur 4 befindet sich in einer Umgebung mit zwei Hindernissen H1 und H2, die beispielsweise als Wände ausgebildet sind. Die Hindernisse H1 und H2 bewirken, dass zwischen einer Mehrzahl von Teilnehmern A1-A4 sowie Replikatoreinheiten R1, R2 keine direkte Sichtverbindung besteht. Beispielsweise sind die ortsfesten Teilnehmer A2 und A3 für den mobilen Teilnehmer E hinter dem Hindernis W2 verborgen, womit zwischen dem jeweiligen ortsfesten Teilnehmer A2 und A3 keine Sichtverbindung zu dem mobilen Teilnehmer E vorhanden ist. Allerdings besitzt der Teilnehmer A2, A3 eine direkte Sichtverbindung zu der Replikatoreinheit R1, R2. Die Replikatoreinheit R1, R2 wiederum hat eine direkte Sichtverbindung zu dem mobilen Teilnehmer E.

Die direkte Sichtverbindung zwischen der Replikatoreinheit R2 und dem mobilen Teilnehmer E kann mittels des ortsfesten Teilnehmers A2 genutzt werden, indem der Teilnehmer A2 ein Ortungssignal s2 ausgesendet wird bzw. ein nicht gezeigtes repliziertes Signal basierend auf dem Ortungssignal, welches von dem Teilnehmer E ausgeht, empfängt. Das Verfahren umfasst also ein Ermitteln, mittels einer Verarbeitungseinheit 504, der wenigstens einen weiteren Distanz d3 zwischen der weiteren ortsfesten Replikatoreinheit R2 und dem mobilen Teilnehmer E in Abhängigkeit von einem weiteren replizierten Signal r2, welches mittels der weiteren ortsfesten Replikatoreinheit R2 in Abhängigkeit von dem von einem weiteren ortsfesten Teilnehmer A2 oder dem mobilen Teilnehmer E ausgesendeten Ortungssignal s2 ausgesendet wird, und in Abhängigkeit von einer weiteren Distanz dx2 zwischen der weiteren ortsfesten Replikatoreinheit R2 und dem ortsfesten Teilnehmer A2.

Der ortsfeste Teilnehmer A4 hat direkten Sichtkontakt zu dem mobilen Teilnehmer E. Das Verfahren umfasst deshalb ein Ermitteln, mittels einer Verarbeitungseinheit 504, der wenigstens einen weiteren Distanz d4 zwischen dem weiteren ortsfesten Teilnehmer A4 und dem mobilen Teilnehmer E in Abhängigkeit von einem weiteren Ortungssignal s4, welches mittels dem weiteren ortsfesten Teilnehmer A4 ausgesendet wird.

Die Replikatoreinheit R1 kann mehrfach für einen Ortungsvorgang des mobilen Teilnehmers E verwendet werden. Insbesondere nutzen mehrere ortsfeste Teilnehmer A1 und A3 die eine Replikatoreinheit R1 zur Ermittlung der räumlichen Position des mobilen Teilnehmers E. Das Verfahren umfasst somit ein Ermitteln, mittels einer Verarbeitungseinheit 604, der zweiten Distanz d2, insbesondere eines weiteren Werts der zweiten Distanz d2, zwischen der ortsfesten Replikatoreinheit R1 und dem mobilen Teilnehmer E in Abhängigkeit von einem weiteren replizierten Signal r3, welches mittels der ortsfesten Replikatoreinheit R1 in Abhängigkeit von dem Ortungssignal E des mobilen Teilnehmers E oder einem von einem weiteren ortsfesten Teilnehmer A3 ausgesendeten Ortungssignal s3 ausgesendet wird, und in Abhängigkeit von einer weiteren Distanz dx3 zwischen der Replikatoreinheit R1 und dem weiteren ortsfesten Teilnehmer A3.

## Patentansprüche

1. Ein Verfahren zur Ermittlung einer Position (pE) eines mobilen Teilnehmers (E) eines Drahtloskommunikationsnetzwerks (RCN), wobei das Verfahren umfasst:
Ermitteln (102) einer ersten Distanz (d1) zwischen dem mobilen Teilnehmer (E) und einem ortsfesten Teilnehmer (A1) des Drahtloskommunikationsnetzwerks (RCN) in Abhängigkeit von einem von dem ortsfesten Teilnehmer (A1) oder dem mobilen Teilnehmer (E) ausgesendeten Ortungssignal (s1; sE);
Ermitteln (104) einer zweiten Distanz (d2) zwischen einer ortsfesten Replikatoreinheit (R1) und dem mobilen Teilnehmer (E) in Abhängigkeit von einem replizierten Signal (r1), welches mittels der ortsfesten Replikatoreinheit (R1) in Abhängigkeit von dem Ortungssignal (s1; sE) ausgesendet wird, und in Abhängigkeit von einer weiteren Distanz (dx1) zwischen der Replikatoreinheit (R1) und dem ortsfesten Teilnehmer (A1); und
Ermitteln (106) einer Position (pE) des mobilen Teilnehmers (E) in Abhängigkeit von der ersten Distanz (d1) und in Abhängigkeit von der zweiten Distanz (d2).

2. Das Verfahren gemäß dem Anspruch 1, wobei das Verfahren umfasst:
Ermitteln (504) wenigstens einer weiteren Distanz (d3; d4) zwischen dem mobilen Teilnehmer (E) und einer weiteren ortsfesten Replikatoreinheit (R2) oder einem weiteren ortsfesten Teilnehmer (A4); und
Ermitteln (106) der Position (pE) des mobilen Teilnehmers (E) in Abhängigkeit von der ersten Distanz (d1), in Abhängigkeit von der zweiten Distanz (d2) und in Abhängigkeit von der wenigstens einen weiteren Distanz (d3; d4).

3. Das Verfahren gemäß dem Anspruch 2, wobei das Verfahren umfasst:
Ermitteln (504) der wenigstens einen weiteren Distanz (d3) zwischen der weiteren ortsfesten Replikatoreinheit (R2) und dem mobilen Teilnehmer (E) in Abhängigkeit von einem weiteren replizierten Signal (r2), welches mittels der weiteren ortsfesten Replikatoreinheit (R2) in Abhängigkeit von einem von einem weiteren ortsfesten Teilnehmer (A2) oder dem mobilen Teilnehmer (E) ausgesendeten Ortungssignal (s2) ausgesendet wird, und in Abhängigkeit von einer weiteren Distanz (dx2) zwischen der weiteren ortsfesten Replikatoreinheit (R2) und dem ortsfesten Teilnehmer (A2).

4. Das Verfahren gemäß dem Anspruch 2 oder 3, wobei das Verfahren umfasst:
Ermitteln (504) der wenigstens einen weiteren Distanz (d4) zwischen dem weiteren ortsfesten Teilnehmer (A4) und dem mobilen Teilnehmer (E) in Abhängigkeit von einem weiteren Ortungssignal (s4), welches mittels dem weiteren ortsfesten Teilnehmer (A4) ausgesendet wird.

5. Das Verfahren gemäß einem der vorigen Ansprüche, wobei das Verfahren umfasst:
Ermitteln (604) der zweiten Distanz (d2), insbesondere eines weiteren Werts der zweiten Distanz (d2), zwischen der ortsfesten Replikatoreinheit (R1) und dem mobilen Teilnehmer (E) in Abhängigkeit von einem weiteren replizierten Signal (r3), welches mittels der ortsfesten Replikatoreinheit (R1) in Abhängigkeit von dem Ortungssignal (E) des mobilen Teilnehmers (E) oder einem von einem weiteren ortsfesten Teilnehmer (A3) ausgesendeten Ortungssignal (s3) ausgesendet wird, und in Abhängigkeit von einer weiteren Distanz (dx3) zwischen der Replikatoreinheit (R1) und dem weiteren ortsfesten Teilnehmer (A3).

6. Das Verfahren gemäß einem der vorigen Ansprüche, wobei das Verfahren umfasst:
Ermitteln einer dritten Distanz (dx1) zwischen einem bzw. dem ersten Teilnehmer (A1) des Drahtloskommunikationsnetzwerks (RCN) und der ortsfesten Replikatoreinheit (R1) in Abhängigkeit von einem von dem ersten ortsfesten Teilnehmer (A1) ausgesendeten Ortungssignal (s1);
Ermitteln einer vierten Distanz (dx2) zwischen einem zweiten Teilnehmer (A3) und der ortsfesten Replikatoreinheit (R1) in Abhängigkeit von einem von dem zweiten ortsfesten Teilnehmer (A3) ausgesendeten Ortungssignal (s3); und
Ermitteln einer Position (pR1) der Replikatoreinheit (R1) in Abhängigkeit von der ersten Distanz (d1) und in Abhängigkeit von der zweiten Distanz (d2).

7. Eine Vorrichtung (100) zur Ermittlung einer Position eines mobilen Teilnehmers (E) eines Drahtloskommunikationsnetzwerks (RCN), wobei die Vorrichtung (100) dazu konfiguriert ist,
mittels einer Verarbeitungseinheit (102) eine erste Distanz (d1) zwischen dem mobilen Teilnehmer (E) und einem ortsfesten Teilnehmer (A1) des Drahtloskommunikationsnetzwerks (RCN) in Abhängigkeit von einem von dem ortsfesten Teilnehmer (A1) oder dem mobilen Teilnehmer (E) ausgesendeten Ortungssignal (s1; sE) zu ermitteln;
mittels einer Verarbeitungseinheit (104) eine zweite Distanz (d2) zwischen einer ortsfesten Replikatoreinheit (R1) und dem mobilen Teilnehmer (E) in Abhängigkeit von einem replizierten Signal (r1), welches mittels der ortsfesten Replikatoreinheit (R1) in Abhängigkeit von dem Ortungssignal (s1; sE) ausgesendet wird, und in Abhängigkeit von einer weiteren Distanz (dx1) zwischen der Replikatoreinheit (R1) und dem ortsfesten Teilnehmer (A1) zu ermitteln; und
mittels einer Verarbeitungseinheit (106) eine Position (pE) des mobilen Teilnehmers (E) in Abhängigkeit von der ersten Distanz (d1) und in Abhängigkeit von der zweiten Distanz (d2) zu ermitteln.

8. Die Vorrichtung (100) gemäß dem Anspruch 6, welche zur Durchführung des Verfahrens gemäß einem der Ansprüche 2 bis 5 ausgebildet ist.

9. Ein mobiler oder ortsfester Teilnehmer (E; A1) eines Drahtloskommunikationsnetzwerks (RCN), welcher die Vorrichtung (100) gemäß dem Anspruch 6 oder 7 umfasst.

10. Eine von einem Drahtloskommunikationsnetzwerk (RCN) entfernt angeordnete Netzwerkeinheit, welche die Vorrichtung (100) gemäß dem Anspruch 6 oder 7 umfasst.

11. Ein Drahtloskommunikationsnetzwerk (RCN) umfassend die Vorrichtung (100) gemäß dem Anspruch 6 oder 7, eine Mehrzahl ortsfester Teilnehmer (A1-A4), eine Mehrzahl von Replikatoreinheiten (R1, R2) und wenigstens einen mobilen Teilnehmer (E).
